# EUROPEAN PATENT APPLICATION

(11) **EP 2 581 621 A1**
(43) Date of publication of application: **17.04.2013**
(21) Application number: 11792070.2
(22) Date of filing: 16.03.2011
(51) Int. Cl.: F16D 65/12, B21D 28/10, B21D 53/88

(54) **PROCESS FOR PRODUCING BRAKE DISK, AND BRAKE DISK**

(30) Priority: 09.06.2010 JP 2010132367
(71) Applicant: Yutaka Giken Co., Ltd., Shizuoka 431-3194 (JP)
(72) Inventor: TAKAGI, Yasuhiro, Hamamatsu-shi Shizuoka 431-3194 (JP); KAWAI, Hidekazu, Hamamatsu-shi Shizuoka 431-3194 (JP)
(74) Representative: Epping - Hermann - Fischer
(86) International application number: PCT/JP2011/001552
(87) International publication number: WO 2011/155107

(57) **Abstract**

In a method of manufacturing a brake disc having an outer peripheral shape of projections-recesses repetition in which a radial projection and a radial recess are alternately repeated in the circumferential direction of the brake disc, there is provided a method in which a curved face portion can be formed uniformly over the entire outer peripheral edge portion of the disc main body so as to eliminate the step of chamfering for removing burrs and which is superior in productivity. A disc main body 1 whose outer peripheral shape is projections-recesses repetition is half-blanked from one of plate thickness directions of a sheet material W. Thereafter, the disc main body 1 is blanked from the other of the plate thickness directions of the sheet material W. At an outer peripheral edge portion of each surface in said one and the other of the plate thickness directions of the disc main body 1 manufactured by this method, there is formed a curved face portion 1b, 1d, due to sagging, on the disc main body 1 in a manner to be in continuation of the sheared portions 1a, 1c on an outer peripheral surface of the disc main body 1. The inner diameter R₁₁ of the die 11 to be used in the half-blanking step is configured to be slightly smaller than the outer diameter R₁₂ of the punch 12.

## Description

### [Technical Field]

The present invention relates to a method of manufacturing a brake disc having an outer peripheral shape of projections-recesses repetition in which a radial projection and a radial recess are alternately repeated in the circumferential direction of the brake disc, and relates to a brake disc.

### [Background Art]

Conventionally, as a method of manufacturing this kind of brake disc, there is known in Patent Document 1 a method in which a disc main body having an outer peripheral shape of projections-recesses repetition is blanked (stamped) by a single pressing from one of plate thickness directions of a sheet material. In this case, since the outer peripheral edge portion in a surface of one of plate thickness directions of the sheet material for the disc main body will give rise to burrs at the time of blanking, there will be needed a step of removing burrs. Therefore, in the art as described in the Patent Document 1, a chamfering mold is forced against the outer peripheral edge portion of the disc main body, after blanking, so as to crush the burrs, thereby forming a chamfered surface.

However, in case the chamfering is performed as noted above, there are cases where an inclined surface of the chamfering mold does not come into uniform contact with the outer peripheral edge portion of the disc main body over the entire circumference thereof due to fluctuations in the plate thicknesses of the disc main bodies, positional deviation of the disc main bodies relative to the chamfering mold, and the like. Then, as a result of the fluctuations in the contact of the chamfering mold, there will no longer be obtained a uniform chamfered surface over the entire circumference. There is thus a disadvantage in that an aesthetic impression is impaired.

Further, since the chamfering mold is locally subjected to a heavy load, the lifetime of the mold becomes short. As a result, frequent replacement of the chamfering mold becomes necessary, thereby resulting in a disadvantage in lowering of productivity.

Still furthermore, if the disc main body is blanked by a single pressing work in one of plate thickness directions of a sheet material, the area in a broken-out (ruptured) portion at the outer peripheral surface of the disc main body becomes large, thereby making the obtained product unfit for use as a brake disc whose aesthetic impression is important. Therefore, in order to remove the broken-out portion, a step of cutting the outer periphery of the disc main body will become essential.

### [Prior Art Document]

### [Patent Document]

Patent Document 1: JP-A-2008-232441

### [Summary of the Invention]

### [Problems to be Solved by the Invention]

In view of the above-mentioned points, this invention has a problem of providing a method of manufacturing a brake disc, and a brake disc, in which curved face portions can be formed uniformly in the outer peripheral edge portion over the entire outer circumference of the disc main body, and in which a chamfering process to remove burrs or an outer periphery cutting process is eliminated, resulting in superiority in productivity.

### [Means for Solving the Problems]

In order to solve the above-mentioned problems, the first invention of this application is a method of manufacturing a brake disc having an outer peripheral shape of projections-recesses repetition in which a radial projection and a radial recess are alternately repeated in a circumferential direction of the brake disc. The method comprises: a half-blanking step of half-blanking a disc main body having the outer peripheral shape of projections-recesses repetition, the half-blanking being performed from one of plate thickness directions of a sheet material; and a blanking step of blanking the disc main body from the other of the plate thickness directions of the sheet material.

Further, the second invention of this application is a brake disc having an outer peripheral shape of projections-recesses repetition in which a radial projection and a radial recess are alternately repeated in a circumferential direction of the brake disc. A disc main body having the outer peripheral shape of projections-recesses repetition is half-blanked from one of plate thickness directions of a sheet material, and the disc main body is blanked from the other of the plate thickness directions of the sheet material such that a curved face portion is formed on the disc main body at an outer peripheral edge portion of each surface in said one and the other of the plate thickness directions of the sheet material. Each of the curved face portions is in continuation of a sheared portion on an outer peripheral surface of the disc main body.

When the disc main body is half-blanked from one of the plate thickness directions of the sheet material, there will be formed, due to sagging (or roll-over), a curved face portion on the disc main body at an outer peripheral edge portion of the surface in the other of the plate thickness directions of the sheet material. The curved face portion is in continuation of that sheared portion, to be generated by half-blanking, which is generated on the outer peripheral surface of the disc main body. Further, when the disc main body is blanked from the other of the plate thickness directions of the sheet material, there will be formed, due to sagging, a curved face portion on the disc main body at an outer peripheral edge portion of the surface in one of the plate thickness directions of the sheet material. The curved face portion is in continuation of that sheared portion, to be formed by blanking, which is generated on the outer peripheral surface of the disc main body. Therefore, like the above-mentioned second invention, there will be formed a curved face portion on the disc main body at an outer peripheral edge portion of each surface in said one and the other of the plate thickness directions of the sheet material. Each of the curved face portions is in continuation of sheared portions on an outer peripheral surface of the disc main body. As a result, no burrs will be generated in the outer peripheral edge portion, and no chamfering process is required for removing the burrs.

In addition, since these curved face portions are formed by sagging which come into existence as a result of half-blanking and blanking, they are different from those in which chamfered surfaces are formed by embossing with chamfering mold. Even if there are fluctuations in thicknesses of sheet materials, the curved face portions can be formed uniformly over the entire circumference of the disc main body, thereby improving the aesthetic impression.

Further, according to this invention, there will be required a blanking mold and a half-blanking mold which serves as a replacement for the chamfering mold in the above-mentioned conventional example. Unlike the chamfering mold, this half-blanking mold, however, is not subject to local heavy loads. As a result, frequent replacement becomes unnecessary, with a consequent improvement in productivity.

By the way, there will be formed on the outer peripheral surface of the disc main body a broken-out portion which is formed by blanking at a position between the sheared portions in one and the other of the plate thickness directions. This broken-out portion becomes smaller in diameter than the sheared portions. Therefore, there is no possibility that the broken-out portion protrudes beyond the outer peripheral surface of the disc main body, whereby safety is secured. Further, by performing blanking after half-blanking like in this invention, the area of the broken-out portion becomes so small that it ceases to be conspicuous to the eye. As a result, there will be needed no step for cutting the outer periphery of the disc main body.

Further, according to this invention, it is preferable to make the inner diameter of the die to be used in the half-blanking step smaller than the outer diameter of the punch. According to this configuration, the disc main body to be half-blanked will be forced under pressure into the die. Therefore, the sheared portion of the outer peripheral surface of the disc main body is formed into a mirror-finished state, thereby improving the aesthetic impression.

### [Brief Description of the Drawings]

FIG. 1 is a side view of a brake disc according to an embodiment of this invention.
FIG. 2(a) is a sectional view showing the half-blanking step of the manufacturing method according to an embodiment of this invention, and FIG. 2(b) is a sectional view showing the blanking step of the manufacturing method according to the embodiment of this invention.
FIG. 3 is an enlarged sectional view of a peripheral portion of the disc main body as manufactured by the manufacturing method according to an embodiment of this invention.

### [Embodiments for Carrying out the Invention]

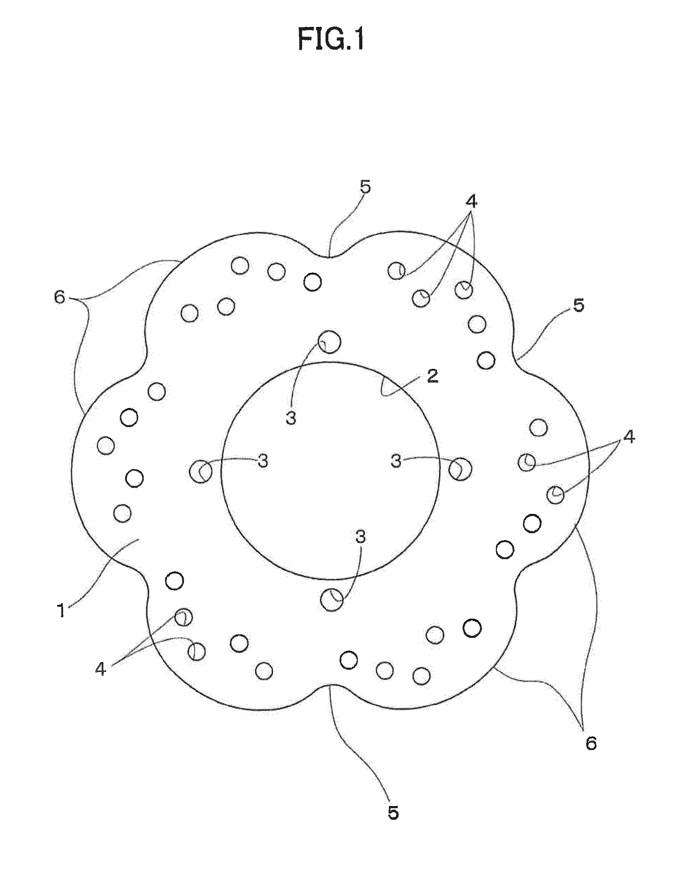

FIG. 1 shows a brake disc according to an embodiment of this invention. In the central part of a disc main body 1 of this brake disc there is formed a shaft hole 2 for inserting thereinto a shaft (not illustrated) of a vehicle such as a motorcycle and the like. Around this shaft hole 2 there are formed a plurality of fixing holes 3 at an equal distance from one another in the circumferential direction, the fixing holes 3 being for fixing the disc main body 1 to a wheel hub on the shaft. Further, in that portion of the disc main body 1 which comes into sliding contact with a brake pad (not illustrated), there are formed a multiplicity of drain holes 4.

The outer peripheral shape of the disc main body 1 is formed into a shape of projections-recesses repetition in which a radially recessed portion 5 and a radially projected portion 6 are alternately repeated in the circumferential direction of the disc main body 1. In this embodiment the numbers of the recessed portions 5 and the projected portions 6 are respectively 6. However, these numbers may be below 6 or above 6.

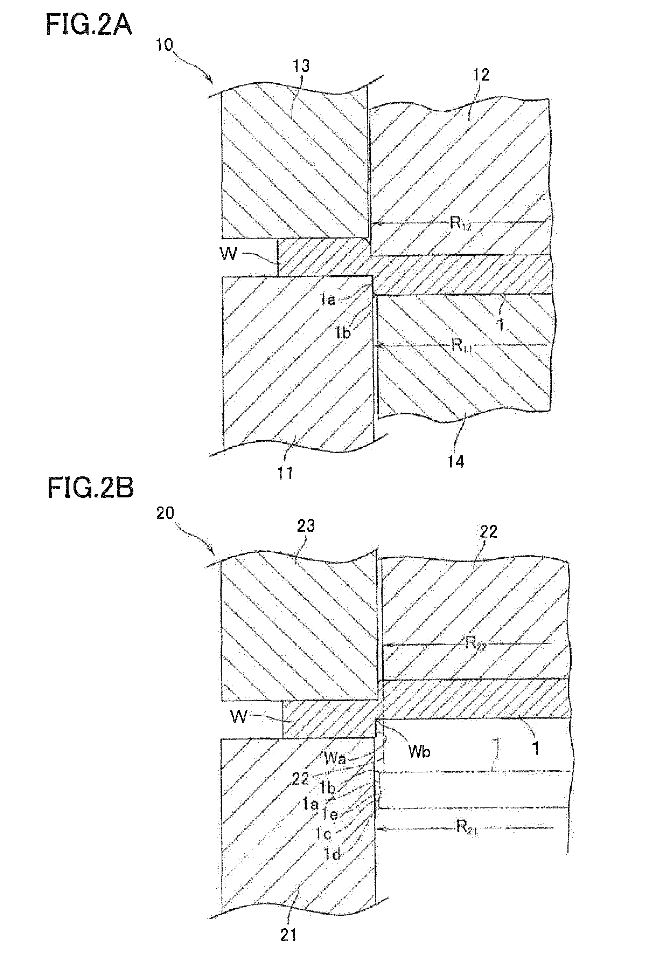

In manufacturing the brake disc, first, the disc main body 1 whose outer peripheral shape is of projections-recesses repetition (see FIG. 2) is manufactured. Then, the disc main body 1 is subjected to the machining work of piercing the drain holes 4 and the shaft hole 2 in succession. Then, the disc main body 1 is sequentially subjected to the processing of quenching of the disc main body 1, boring by machining of the fixing holes 3, surface treatment, grinding of each surface, as seen in a thickness direction thereof, of the disc main body 1, and the like.

Here, the manufacturing of the disc main body 1 having an outer peripheral shape of projections-recesses repetition is performed in two steps of half-blanking step and blanking step. Detailed description will hereinafter be made of the half-blanking step and the blanking step with reference to FIG. 2 (a) and FIG. 2(b).

A mold 10 to be used in the half-blanking step is made up, as shown in FIG. 2(a), of: a lower die 11 whose inner peripheral shape is formed into projections-recesses repetition; an upper punch 12 whose outer peripheral shape is formed into projections-recesses repetition; a blank holder 13 for pushing the outer peripheral portion of a sheet material W made of metal such as stainless steel and the like onto an upper surface of the die 11; and a pad 14 which is disposed inside the die 11 so as to lie opposite to the punch 12. Here, the inner diameter R₁₁ of the die 11 (the inner diameters of the recessed portions and of the projected portions, respectively, of the die 11) is configured to be slightly smaller than the outer diameter R₁₂ of the punch 12 (the outer diameters of the recessed portions and of the projected portions, respectively, of the punch 12).

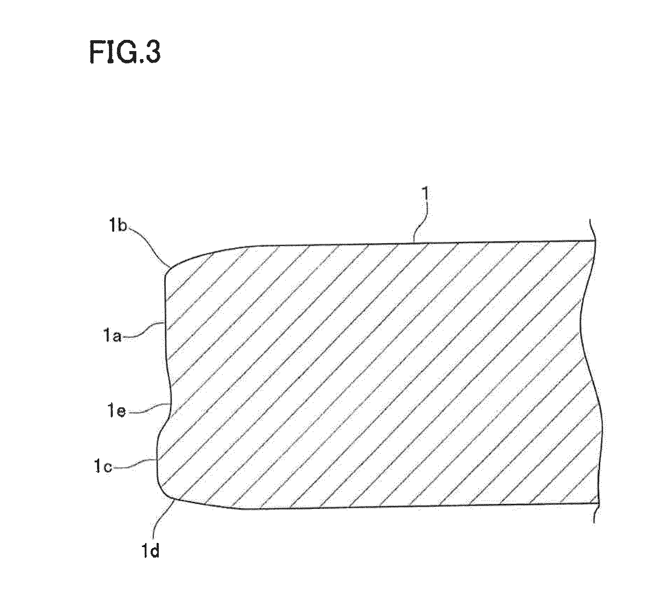

In the half-blanking step, the punch 12 is lowered in a state in which a surface in one of plate thickness directions of the sheet material W faces upward. The disc main body 1 having the outer peripheral shape of projections-recesses repetition is half-blanked from one of the plate thickness directions of the sheet material W by about 25 - 50% of the plate thickness. As a result of this half-blanking, as shown in FIG. 3, a sheared portion 1a is formed on the side of the other of the plate thickness directions along an outer peripheral surface of the disc main body 1, and there is further formed a curved face portion 1b at an outer peripheral edge portion of the surface in the other of the plate thickness directions of the disc main body 1, the curved face portion being generated by sagging in a manner to be in continuation of the sheared portion 1a.

Further, since the inner diameter R₁₁ of the die 11 is smaller than the outer diameter R₁₂ of the punch 12, the disc main body 1 to be half-blanked will be press-fitted by force into the die 11. Therefore, the sheared portion 1a along the outer peripheral surface of the disc main body 1 will be formed into a mirror-finished state.

When the half-blanking step is finished, the sheet material W is set in position onto a mold 20 to be used in blanking, as shown in FIG. 2(b), in a state in which the sheet material W is placed upside down. This mold 20 is made up of: a lower die 21 whose inner peripheral shape is formed into projections-recesses repetition; an upper punch 22 whose outer peripheral shape is formed into projections-recesses repetition; and a blank holder 23 which presses the outer peripheral portion of the sheet material W against the upper surface of the die 21. The inner diameter R₂₁ of the die 21 is configured to be slightly larger than the outer diameter R₁₂ of the punch 12 of the half-blanking mold 10, and the outer diameter R₂₂ of the punch 22 is configured to be slightly smaller than the inner diameter R₁₁ of the die 11 of the half-blanking mold 10.

In the blanking step, the punch 22 is lowered in a state in which a surface in the other of the plate thickness directions of the sheet material W looks upward. The half-blanked disc main body 1 is thus blanked, as shown in imaginary lines in FIG. 2(b), from the other of the plate thickness directions of the sheet material W.

In this case, shearing of the disc main body 1 will start with a bottom hole corner Wb of the recessed hole Wa, formed in the half-blanking, serving as an origin. Then, as shown in FIG. 3, a sheared portion 1c due to blanking is formed in one side of the plate thickness directions along the outer peripheral surface of the disc main body 1. Along the outer peripheral edge portion of a surface in one of plate thickness directions of the disc main body 1, there is formed, as shown in FIG. 3, a curved face portion 1d, due to sagging, which is in continuation of the sheared portion 1c.

In addition, in a position between the sheared portions 1a, 1c on both sides in the plate thickness directions at the outer peripheral portion of the disc main body 1, there is formed a broken-out (ruptured) portion 1e which is generated by blanking. This broken-out portion 1e becomes smaller in diameter than the sheared portions 1a, 1c. Therefore, safety can be secured because there is no possibility that the broken-out portion 1e protrudes beyond the outer peripheral surface of the disc main body 1. In addition, the broken-out portion 1e becomes smaller in area, thereby becoming less conspicuous to the eye, as compared with the conventional example in which the disc main body is blanked by a single pressing work from one of plate thickness directions.

By the way, the reason why the outer diameter R₂₂ of the punch 22 of the blanking mold 20 is configured to be smaller than the inner diameter R₁₁ of the die 11 of the half-blanking mold 10 is to prevent the curved face portion 1b of the half-blanked disc main body 1 from getting out of shape, and also to prevent the burrs from being generated due to shearing once again of scrap by the punch 22. Further, the reason why the inner diameter R₂₁ of the die 21 for the blanking mold 20 is configured to be larger than the outer diameter R₁₂ of the punch 12 of the half-blanking mold 10 is to prevent the disc main body 1 from getting sheared directly with the cutting tooth (corner portion) of the die 21 and to eliminate the possibility of chipping (breaking) at the corner portion of the die 21, thereby improving the durability of the die 21. In this case, the corner portion of the die 21 may be rounded in shape; the accuracy of the die 21 does not need to be made higher.

As described hereinabove, according to this embodiment, there will be formed a curved face portion 1b, 1d at an outer peripheral edge portion of the surface in each of the one and the other of the plate thickness directions of the disc main body 1, the curved face portions being in continuation of the sheared portions 1a, 1c on the outer peripheral surface of the disc main body 1. As a result, there will occur no burrs at the outer peripheral edge portion, whereby a step of removing burrs becomes unnecessary. Further, since the area of the broken-out portion 1e becomes smaller and less conspicuous to the eye as noted above, outer peripheral cutting step becomes also needless.

Further, since these curved face portions 1b, 1d are formed by sagging to be generated by half-blanking and blanking, curved face portions 1b, 1d are uniformly formed over the entire circumference of the disc main body even though the plate thicknesses fluctuate. This feature is different from that of the case in which a chamfered surface is formed by embossing with a chamfering mold. As a result of combined effect in that the sheared portion 1a is formed into a mirror-finished surface, the aesthetic impression of the disc main body is improved.

Further, according to this embodiment, there will be required a half-blanking mold 10 in place of the conventional chamfering mold. This mold 10 is, however, not locally subjected to a heavy load, unlike the chamfering mold. Therefore, as a result of combined effect in that frequent replacement of the mold becomes unnecessary, and in that bur removal step and peripheral cutting step become unnecessary, the productivity largely improves.

Description has so far been made of the embodiment of this invention with reference to the drawings, but this invention is not limited to the above. For example, in the above-mentioned embodiment, this invention was applied to a brake disc of a single-plate construction. However, this invention can also be applied to a floating type brake disc in which an annular rotor portion which comes into sliding contact with a brake pad and a hub portion which is fixed to a wheel hub are connected together in a floatable manner. In other words, by using as a disc main body a rotor portion having an outer peripheral shape of projections-recesses repetition, this invention can be applied in a similar manner.

### [Description of Reference Numerals]

1 disc main body 1a, 1c sheared portion 1b, 1d curved face portion 1e broken-out portion 5 recessed portion on the outer periphery of the disc main body 6 projected portion on the outer periphery of the disc main body 10 half-blanking mold 11 die 12 punch W sheet material

## Claims

1. A method of manufacturing a brake disc having an outer peripheral shape of projections-recesses repetition in which a radial projection and a radial recess are alternately repeated in a circumferential direction of the brake disc, the method comprising:
a half-blanking step of half-blanking a disc main body having the outer peripheral shape of projections-recesses repetition, the half-blanking being performed from one of plate thickness directions of a sheet material; and
a blanking step of blanking the disc main body from the other of the plate thickness directions of the sheet material.

2. The method of manufacturing a brake disc according to claim 1, wherein an inner diameter of a die to be used in the half-blanking step is configured to be smaller than an outer diameter of a punch.

3. A brake disc having an outer peripheral shape of projections-recesses repetition in which a radial projection and a radial recess are alternately repeated in a circumferential direction of the brake disc,
wherein a disc main body having the outer peripheral shape of projections-recesses repetition is half-blanked from one of plate thickness directions of a sheet material and the disc main body is blanked from the other of the plate thickness directions of the sheet material such that a curved face portion is formed on the disc main body at an outer peripheral edge portion of each surface in said one and the other of the plate thickness directions of the sheet material, each of the curved face portions being in continuation of a sheared portion on an outer peripheral surface of the disc main body.

4. The brake disc according to claim 3, wherein a broken-out portion which is smaller in diameter than the sheared portions is formed on the outer peripheral surface of the disc main body in a manner to be positioned between the sheared portions in one and the other of the plate thickness directions.
